**Europäisches Patentamt**

**European Patent Office**

**Office européen des brevets**

(19)

(11) Veröffentlichungsnummer : **0 201 816**
**B1**

(12) **EUROPÄISCHE PATENTSCHRIFT**

(45) Veröffentlichungstag der Patentschrift :
23.11.89

(21) Anmeldenummer : 86106026.7

(22) Anmeldetag : 02.05.86

(51) Int. Cl.⁴ : **E 04 C   2/34**, E 04 C   2/54,
**B 32 B 27/08**

(54) **Mehrschichtige Stegplatte mit verbesserter Lichtdurchlässigkeit.**

(30) Priorität : 15.05.85 DE 8514365 U

(43) Veröffentlichungstag der Anmeldung :
20.11.86 Patentblatt 86/47

(45) Bekanntmachung des Hinweises auf die Patenterteilung : 23.11.89 Patentblatt 89/47

(84) Benannte Vertragsstaaten :
AT DE FR IT NL SE

(56) Entgegenhaltungen :
EP-A- 0 109 388
US-A- 4 264 140

(73) Patentinhaber : **Röhm GmbH**
**Kirschenallee Postfach 4242**
**D-6100 Darmstadt 1 (DE)**

(72) Erfinder : **Siol, Werner, Dr.**
**Goedelerweg 34**
**D-6100 Darmstadt-Eberstadt (DE)**
Erfinder : **Arnold, Wolfgang**
**Im Entich 6**
**D-6140 Bensheim 1 (DE)**
Erfinder : **Vetter, Heinz, Dr.-Ing.**
**Taunusstrasse 6**
**D-6101 Rossdorf 1 (DE)**

## Beschreibung

Die Erfindung betrifft eine mehrschichtige Stegplatte aus Kunststoff, die zwei im wesentlichen ebene Außenwände und diese einstückig verbindende Stege enthält, wobei die Außenwände aus mehreren haftend verbundenen Schichten aus verschiedenen Kunststoffen bestehen. Stegplatten dieser Art sind durch Extrusion herstellbar und weisen in der Regel in der Extrusionsrichtung ein über die ganze Länge gleichbleibendes Profil auf.

Eine mehrschichtige Stegplatte, deren Außenwände aus einer tragenden Schicht aus Polycarbonat-Kunststoff, einer Zwischenschicht aus modifiziertem Polycarbonat-Kunststoff und einer Deckschicht aus Polymethylmethacrylat zusammengesetzt sind, ist aus der EP-A-110 221 bekannt. Der Schichtaufbau dient der Verbesserung der UV-Beständigkeit und der Herstellbarkeit.

Eine andere mehrschichtige Stegplatte ist aus der EP-A-118 683 bekannt. Die Außenwände bestehen aus einer tragenden Außenschicht aus Acrylglas und einer dünneren Innenschicht aus einem zähen Kunststoff, wie z. B. Polycarbonat-Kunststoff, wodurch eine hohe Schlagfestigkeit erreicht wird.

Gemäß DE-B-16 94 273 wird eine Tafel aus Polycarbonat-Kunststoff mit einem Polymethylmethacrylat-Lack beschichtet, wodurch die Lichtdurchlässigkeit der Tafel geringfügig verbessert wird.

Ein Nachteil der bekannten Stegdoppelplatten, deren Außenwände ein- oder mehrschichtig aufgebaut sind, liegt in ihrer begrenzten Lichtdurchlässigkeit. Auch wenn sie aus glasklarem Polycarbonat-Kunststoff erzeugt sind und die Stege senkrecht zu den Außenwänden angeordnet sind, beträgt die Lichtdurchlässigkeit nur etwa 78 %. Durch eine Beschichtung der Außenwände mit einem Polymethylmethacrylat-Lack gemäß der Lehre der DE-B-1 694 273 wird die Lichtdurchlässigkeit nur unwesentlich auf 80 % erhöht.

Es bestand daher die Aufgabe, die Lichtdurchlässigkeit von Stegplatten aus Kunststoff deutlich zu erhöhen, ohne die räumlichen Abmessungen, wie z. B. die Anordnung und Anzahl der Stege zu verändern.

Die Aufgabe wird durch die mehrschichtigen Stegplatten gemäß dem Patentspruch gelöst. Die erhöhte Lichtdurchlässigkeit beruht auf der Verminderung der Reflexionsverluste an den Grenzflächen zwischen Kunststoff und Luft. Die beiden Außenwände enthalten zusammen vier derartige Grenzflächen, so daß sich die Reflexionsverluste vierfach potenzieren. Die Höhe des Reflexionsverlustes R an einer Grenzfläche hängt gemäß der Formel

$$R = \left( \frac{n-1}{n+1} \right)^2$$

von dem Brechungsindex n des Kunststoffes ab.

Da viele der zur Herstellung von Stegplatten verwendeten Kunststoffe einen hohen Brechungsindex haben, sind die Reflexionsverluste entsprechend groß. Durch eine Oberflächenschicht von vermindertem Brechungsindex läßt sich der Reflexionsverlust deutlich vermindern, während sich der Reflexionsverlust an den zusätzlichen Grenzflächen zwischen den verschiedenen Kunststoffen als vernachlässigbar kein erwiesen hat. Wegen der potenzierenden Wirkung der Reflexionsverluste bei mehreren Grenzflächendurchgängen ist es von entscheidender Bedeutung, daß alle Grenzflächen, also auch die Innenseiten der Außenwände mit dem Kunststoff von vermindertem Brechungsindex beschichtet sind.

Falls die Stegplatte eine oder mehrere weitere Zwischenebenen zwischen den beiden Außenwänden, vorzugsweise parallel zu diesen, aufweist, so sollten aus den vorstehend genannten Gründen diese Zwischenebenen ganz oder wenigstens an ihren Oberflächen aus dem Kunststoff mit niedrigerem Brechungsindex bestehen. Dadurch wird zwar die Lichtdurchlässigkeit gegenüber einer Stegplatte ohne Zwischenebene vermindert, jedoch in einem geringeren Maße als wenn die Zwischenebene aus dem Kunststoff mit dem höheren Brechungsindex bestände.

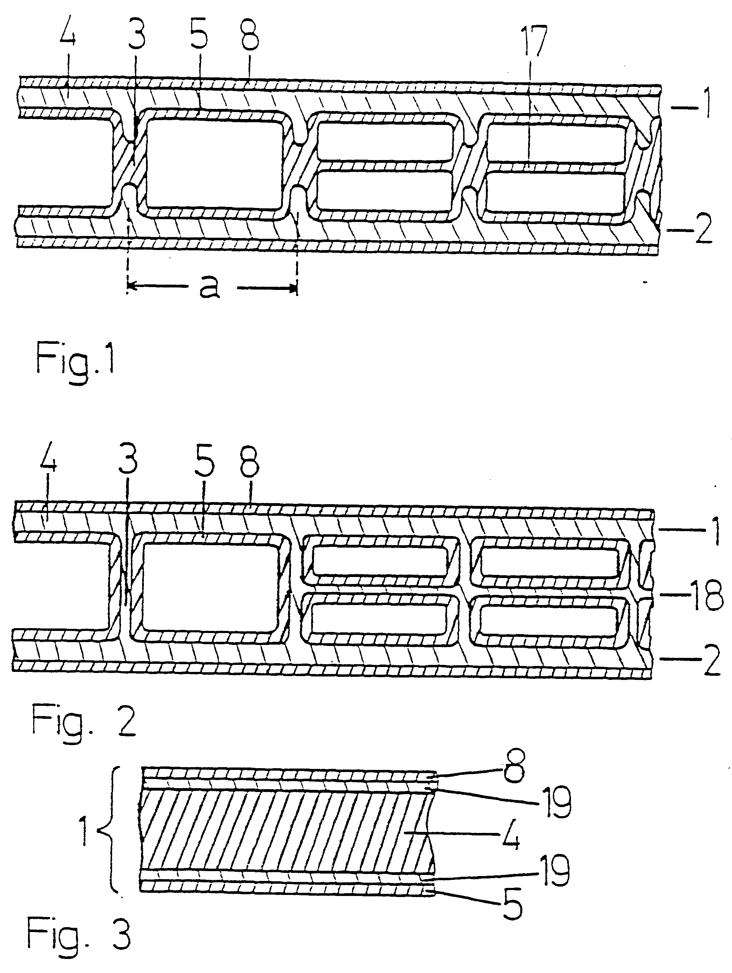

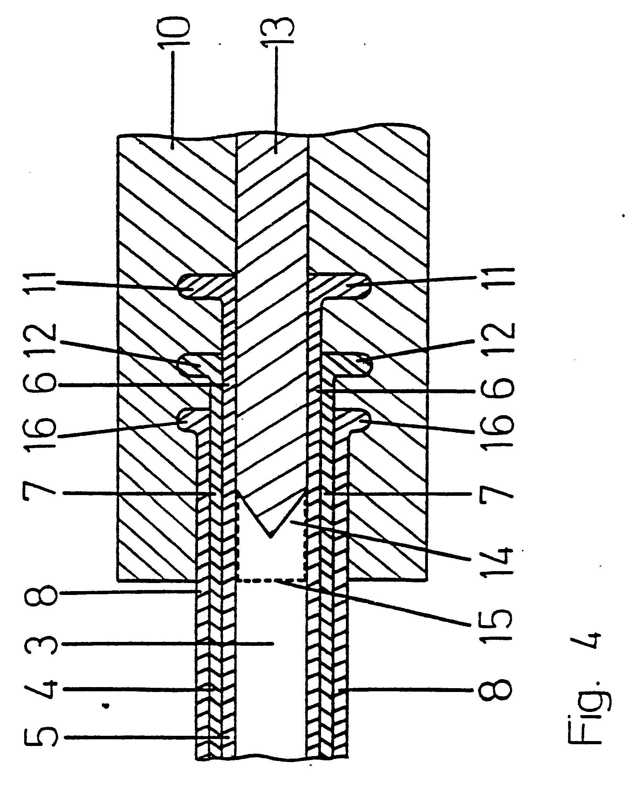

Der Aufbau der neuen Stegplatte wird anhand der Figuren 1 bis 3, die Ausschnitte aus Querschnitten zweier erfindungsgemäßer Stegplatten zeigen, und ihre Herstellung durch Koextrusion anhand Figur 4, die einen Schnitt durch eine Extrusionsdüse darstellt, näher erläutert.

Die Außenwände 1, 2 sind in der Regel parallel zueinander angeordnet und sind beiderseits möglichst glatt. Sie sind durch Stege 3 einstückig miteinander verbunden. Die einstückige Verbindung entsteht durch gemeinsame Extrusion der Stege und Außenwände oder durch Verschweißen von getrennt extrudierten Stegen und Außenwänden.

Wegen ihrer tragenden Funktion macht die Dicke der Kernschicht 4 mehr als die Hälfte, vorzugsweise 70 bis 99 % der Gesamtdicke der Außenwände 1, 2 aus. Die Deckschichten 5 und 8 sind vorzugsweise etwa gleich dick und bilden zusammengerechnet 30 bis 1 % der Außenwanddicke.

Die Dicke der Außenwände und Stege ist für die Gesamtlichtdurchlässigkeit der Stegplatte von geringer Bedeutung. In der Regel sind die Stege etwa gleich dick wie die Außenwände und deren Dicke beträgt jeweils etwa 1/20 bis 1/5 der Gesamtdicke d der Stegplatte. Die Stegabstände a sind vorzugsweise etwa 1- bis 2-mal so groß wie die Gesamtdicke d der Stegplatte. Falls eine oder mehrere Mittelebenen vorhanden sind, können diese wesentlich dünner als die Außenwände sein, z. B. 0,1 bis 1 mm. Die Gesamtdicke d beträgt in der Regel 5 bis 50 mm, die Gesamtbreite 0,5 bis 3 m.

Der Kunststoff der Kernschicht 4 verleiht der Stegplatte ihre mechanische Festigkeit. Er muß daher bei Raumtemperatur hart und steif und vorzugsweise schlagzäh sein. Viele Kunststoffe mit diesem Eigenschaftsbild weisen Brechungsindices $n_D^{20} > 1,48$ auf:

| | |
|---|---|
| Polymethylmethacrylat | $n = 1,49$ |
| Polystyrol | $n = 1,6$ |
| Bisphenol-A-polycarbonat | $n = 1,6$ |
| Polyvinylchlorid | $n = 1,55$ |

Die handelsüblichen extrudierbaren Kunststoffe dieser Typen enthalten häufig modifizierende Zusätze oder Comonomere, die am Aufbau des Polymerisats selbst beteiligt sind. Da diese Modifizierungen meist nur geringen Einfluß auf den Brechungsindex haben, können sie im vorliegenden Zusammenhang unbeachtet bleiben.

Wenn die Stegplatte durch gemeinsame Koextrusion aller Schichten erzeugt wird, müssen die verwendeten Kunststoffe gemeinsam extrudierbar sein und gut aneinander haften. Vorzugsweise sind alle beteiligten Kunststoffe klar und farblos und können übliche UV-Absorber enthalten.

Der Kunststoff der Deckschichten 5 und 8 muß bei Raumtemperatur hart sein, damit die Gebrauchseigenschaften der Stegplatte nicht beeinträchtigt werden. Kunststoffe mit einem Fluorgehalt von mindestens 10 Gew.-% zeichnen sich im allgemeinen durch besonders niedrige Brechungsindices aus und sind deshalb im Falle der Koextrusion der Deckechichten bevorzugt. Geeignet sind polymere Fluoralkylester der Acryl- oder Methacrylsäure, wie Polypentadecafluoroctylacrylat ($n_D^{20} = 1,339$) und Trifluorvinylacetat ($n_D^{20} = 1,375$), sowie Mischpolymerisate, die zu wenigstens 30 Gew.-% aus derartigen Monomeren aufgebaut sind.

Besonders geeignete Kunststoffe sind transparente Mischungen von Polyvinylidenfluorid und Polyalkyl(meth)acrylaten, insbesondere Polymethylmethacrylat. Mischungen im Gewichtsverhältnis von 20 bis 90 Teilen des Fluorkunststoffes zu 80 bis 10 Teilen des Acrylkunststoffes, insbesondere 40 bis 90 zu 60 bis 10 Teilen, sind homogen, während bei noch höherem Anteil des Polyvinylidenfluoridanteils eine störende Neigung zur Kristallisation — vor allem bei langsamer Abkühlung — zu beobachten ist.

Zur Herstellung der Stegplatte durch Koextrusion wird eine Mehrstoff-Schlitzdüse 10 mit Kernstücken 15 zur Bildung der Stege 3 verwendet. Der Kunststoff der Kernschicht wird in thermoplastischem Zustand aus den Massekanälen 12 zu je einer Schicht 7 auf beiden Seiten der Kernstücke 15 ausgestoßen. Aus den Massekanälen 11 und 16 wird die thermoplastische Formmasse zur Bildung der inneren und äußeren Deckschichten in der Weise ausgepreßt, daß die Schichten 7 jeweils beidseitig mit Schichten 6 und 8 des Deckschichtenmaterials belegt wird. Ein Teil der in der innersten Schicht 6 geförderten Formmasse wird zur Ausbildung der Stege 3 in die Schlitze 14 zwischen den Kernstücken 15 gepreßt. Dabei wird meistens ein Teil der Kernschichtmasse in die Stegansätze mit eingezogen, wie in Figur 1 im Schnittbild dargestellt ist. Aus dem gleichen Massenstrom 11 bzw. 6 lassen sich, wenn erwünscht, auch eine oder mehrere Zwischenebenen 17 bilden.

Wenn die Stegplatte im Gebrauch einer häufigen mechanischen Beanspruchung ausgesetzt ist, empfiehlt sich eine Oberflächenbeschichtung von großer Härte und verminderter Kratzempfindlichkeit. Dadurch werden Lichtverluste durch Streuung, die von Kratzern ausgehen, deutlich vermindert. Da die kratzfeste Schicht nur dann ihren Zweck erfüllt, wenn sie die äußerste Deckschicht 8 bildet, muß sie aus einem Kunststoff mit einem Brechungsindex unter 1,46 gebildet werden. Geeignet sind insbesondere Polysiloxanbeschichtungen, die z. B. aus der EP-A-73 911 bekannt sind. Sie werden zweckmäßig aus einer flüssigen Beschichtungsmischung durch Auftragen, Trocknen und gegebenenfalls Härten erzeugt.

Besonders vorteilhaft ist ein Beschichtungsverfahren, bei dem gleichzeitig die inneren und äußeren Deckschichten erzeugt werden. Man taucht dazu die Stegplatte, die in der Regel einheitlich aus dem Kunststoff mit $n \geqslant 1,48$ extrudiert ist, mit offenen Stirnseiten und vorzugsweise senkrecht verlaufenden Stegen in die flüssige Beschichtungsmischung ein, so daß die inneren und äußeren Oberflächen benetzt werden, nimmt sie dann heraus und läßt nach dem Abtropfen des Überschusses trocknen und härten. Gegebenenfalls vorhandene Zwischenschichten 18 werden dabei gleichzeitig mitbeschichtet.

Obwohl die Kratzfestigkeit der Beschichtung an den inneren Oberflächen der Stegplatte ohne Bedeutung ist, erweist sich das beschriebene Tauchverfahren als wirtschaftlicher als die Erzeugung der Deckschichten 5, 8 durch Coextrusion und nachträgliche Kratzfestbeschichtung der äußeren Oberflächen.

Wenn die durch Tauchbeschichtung gebildete Deckschicht auf der Oberfläche der Kernschicht schlecht haftet, kann vor der Deckschicht 5 — ebenfalls durch Tauchbeschichtung — eine Zwischenschicht 19 aufgebracht werden, die so gewählt wird, daß sie sowohl an der Kernschicht 4 als auch an der Deckschicht 5 gut haftet. Sie ist zweckmäßigerweise weniger als 100 μm, vorzugsweise weniger als 20 μm dick und besteht vorzugsweise aus einem Material, dessen optischer Brechungsindex zwischen denen des Kernschicht- und des Deckschichtmaterials liegt. Beispielsweise hat es sich bewährt, ein Hohlkammerprofil aus Polystyrol, Polycarbonat oder Polyvinylchlorid erst mit einer Zwischenschicht 19 aus Polymethylmethacrylat und dann mit der Deckschicht 5 zu überziehen.

## Beispiel 1

Eine dreischichtige Stegplatte aus Polymethylmethacrylat ($n_D^{20}$ = 1,49)
Plattendicke : 16 mm
Stegabstand (a) : 16 mm
Dicke der Außenwände (1,2) : 1,2 mm
Dicke des Stegs (3) : 1,2 mm
Dicke des Mittelgurts (18) : 0,5 mm
wird mit einem Kratzfestlack auf Siloxanbasis (Acriplex 100 sr der Fa. Röhm GmbH, $n_D^{20}$ des ausgehärteten Lacks = 1,43) im Tauchverfahren allseits beschichtet und anschließend ausgehärtet.
Dicke der Polysiloxanschicht : 4 μm
Es resultiert eine brillante, kratzfeste Platte mit einer deutlich verbesserten Lichtdurchlässigkeit :
Lichtdurchlässigkeit der unbehandelten Platte : 77 %
Lichtdurchlässigkeit der behandelten Platte : 81 %

## Beispiel 2

Eine dreischichtige Stegplatte aus Polycarbonat ($n_D^{20}$ = 1,6) (Abmessungen und Aufbau der Platte wie in Beispiel 1) wird durch Tauchbeschichtung allseits mit einem Primer (PMMA) beschichtet. Anschließend wird entsprechend Beispiel 1 mit einem Kratzfestlack auf Siloxanbasis (Acriplex 100 sr der Fa. Röhm GmbH) beschichtet.
Dicke der Primerschicht (19) = 10 μm
Dicke der Polysiloxanschicht = 5 μm
Lichtdurchlässigkeit der unbehandelten Platte : 68 %
Lichtdurchlässigkeit der beschichteten Platte : 78 %

## Beispiel 3

Eine zweischichtige Stegplatte aus Polycarbonat ($n_D^{20}$ = 1,6) Aufbau der Platte :
Plattendicke :10 mm
Stegabstand (a) : 10 mm
Dicke der Außenwände (1,2) : 1 mm
wird entsprechend Beispiel 2 zunächst mit einem Primer aus PMMA beschichtet, danach mit einem Kratzfestlack auf Basis Polysiloxan
Dicke der Primerschicht 19 = 2 μm
Dicke der Polysiloxanschicht = 4 μm
Lichtdurchlässigkeit der unbehandelten Platte : 76 %
Lichtdurchlässigkeit der beschichteten Platte : 82 %

## Beispiel 4

Eine 16 mm dicke Stegplatte, aufgebaut aus 1 mm dicken Stegen und Außenwänden aus Polymethylmethacrylat, die an den inneren und äußeren Oberflächen mit 30 μm dicken coextrudierten Schichten aus einem transparenten Gemisch aus 80 Gew.-% Polyvinylidenfluorid und 20 Gew.-% Polymethylmethacrylat, dessen Brechungsindex $n_D^{20}$ = 1,44 beträgt, beschichtet sind, hat eine Lichtdurchlässigkeit von 87 %. Dagegen beträgt die Lichtdurchlässigkeit einer gleichgestalteten Stegplatte aus reinem Polymethylmethacrylat nur 84 %.

**Patentansprüche**

1. Mehrschichtige Stegplatte, enthaltend zwei im wesentlichen ebene Außenwände (1, 2) und diese einstückig verbindende Stege (3), wobei die Außenwände aus mehreren haftend verbundenen Schichten aus verschiedenen Kunststoffen bestehen, dadurch gekennzeichnet, daß die Außenwände aus einer Kernschicht (4), die mehr als die Hälfte der Dicke der Außenwand ausmacht und aus einem extrudierbaren, steifen Kunststoff mit einem optischen Brechungsindex n ≥ 1,48 besteht, und beiderseits der Kernschicht angeordneten inneren und äußeren Deckschichten (5, 8) aus einem harten Kunststoff mit einem optischen Brechungsindex n ≤ 1,46 zusammengesetzt sind.
2. Mehrschichtige Stegplatte gemäß Anspruch 1, dadurch gekennzeichnet, daß der Kunststoff der Kernschicht ein Polymethacrylat-, Polycarbonat-, Polystyrol- oder Polyvinylchlorid-Kunststoff ist.
3. Mehrschichtige Stegplatte gemäß Anspruch 2, dadurch gekennzeichnet, daß der Kunststoff der Kernschicht (4) aus einem Polycarbonat-Kunststoff auf Basis von Bisphenol A besteht.
4. Mehrschichtige Stegplatte gemäß Anspruch 2, dadurch gekennzeichnet, daß der Kunststoff der Kernschicht (4) aus Polymethylmethacrylat besteht.
5. Mehrschichtige Stegplatte nach den Ansprüchen 1 bis 4, dadurch gekennzeichnet, daß die Deckschichten (5, 8) mit der Kernschicht (4) durch Koextrusion verbunden sind.

6. Mehrschichtige Stegplatte gemäß den Ansprüchen 1 bis 5, dadurch gekennzeichnet, daß der Kunststoff der Deckschichten (5, 8) mindestens 10 Gew.-% Fluor enthält.

7. Mehrschichtige Stegplatte gemäß Anspruch 6, dadurch gekennzeichnet, daß der Kunststoff der Deckschichten aus einer transparenten Mischung aus Polyvinylidenfluorid und einem Polyalkyl(meth)acrylat besteht.

8. Mehrschichtige Stegplatte gemäß Anspruch 7, dadurch gekennzeichnet, daß die transparente Mischung aus 20 bis 90 Gew.-% Polyvinylidenfluorid und 80 bis 10 Gew.-% Polymethylmethacrylat besteht.

9. Mehrschichtige Stegplatte gemäß den Ansprüchen 1 bis 8, dadurch gekennzeichnet, daß sie zwischen den Außenwänden (1, 2) wenigstens eine weitere Zwischenebene (18) aufweisen, die wenigstens an den Oberflächen aus dem Kunststoff mit einem Brechungsindex $n \leqslant 1,46$ besteht.

10. Mehrschichtige Stegplatte nach den Ansprüchen 1 bis 3, dadurch gekennzeichnet, daß die Deckschichten (5, 8) aus einem Polysiloxan bestehen.

11. Mehrschichtige Stegplatte nach Anspruch 10, dadurch gekennzeichnet, daß die Deckschichten (5, 8) aus einem thermisch nicht plastifizierbaren polysiloxan bestehen.

12. Mehrschichtige Stegplatte nach den Ansprüchen 1 bis 11, dadurch gekennzeichnet, daß zwischen den Deckschichten (5, 8) und der Kernschicht (4) eine an diesen Schichten gut haftende Zwischenschicht (19) angeordnet ist.

13. Mehrschichtige Stegplatte nach Anspruch 12, dadurch gekennzeichnet, daß die Zwischenschicht (19) einen optischen Brechungsindex hat, der zwischen dem der Kernschicht (4) und dem der Deckschicht (5, 8) liegt.


**Claims**

1. Multi-layered web plate containing two essentially flat external walls (1, 2) and webs (3) which join these into one piece, the external walls consisting of several layers, joined by adhesion, of various plastics, characterized in that the external walls are composed of a core layer (4) which makes up more than half the thickness of the external wall and consists of an extrudable, rigid plastic with an optical refractive index $n \geqslant 1.48$, and inner and outer covering layers (5, 8), located on both sides of the core layer, of a rigid plastic with an optical refractive index $n \leqslant 1.46$.

2. Multi-layered web plate according to claim 1, characterized in that the plastic of the core layer is a polymethacrylate, polycarbonate, polystyrene or polyvinyl chloride plastic.

3. Multi-layered web plate according to claim 2, characterized in that the plastic of the core layer (4) consists of a polycarbonate plastic based on bisphenol A.

4. Multi-layered web plate according to claim 2, characterized in that the plastic of the core layer (4) consists of polymethyl methacrylate.

5. Multi-layered web plate according to claims 1 to 4, characterized in that the covering layers (5, 8) are joined to the core layer (4) by coextrusion.

6. Multi-layered web plate according to claims 1 to 5, characterized in that the plastic of the covering layers (5, 8) contains at least 10 wt.% fluorine.

7. Multi-layered web plate according to claim 6, characterized in that the plastic of the covering layers consists of a transparent mixture of polyvinylidene fluoride and a polyalkyl(meth)acrylate.

8. Multi-layered web plate according to claim 7, characterized in that the transparent mixture consists of 20 to 90 wt.% polyvinylidene fluoride and 80 to 10 wt.% polymethyl methacrylate.

9. Multi-layered web plate according to claims 1 to 8, characterized in that between the external walls (1, 2) it has at least one further intermediate plane which consists, at least on the surfaces, of the plastic with a refractive index $n \leqslant 1.46$.

10. Multi-layered web plate according to claims 1 to 3, characterized in that the covering layers (5, 8) consist of a polysiloxane.

11. Multi-layered web plate according to claim 10, characterized in that the covering layers (5, 8) consist of a polysiloxane which cannot be plasticated by means of heat.

12. Multi-layered web plate according to claims 1 to 11, characterized in that an intermediate layer (19) which adheres firmly to the covering layers (5, 8) and the core layer (4) is located between these layers.

13. Multi-layered web plate according to claim 12, characterized in that the intermediate layer (19) has an optical refractive index which lies between that of the core layer (4) and that of the covering layer (5, 8).


**Revendications**

1. Plaque à nervures multicouche, comprenant deux parois extérieures essentiellement planes (1, 2) et des nervures (3) reliant d'un seul tenant ces parois, les parois extérieures se composant de plusieurs couches de matières plastiques différentes unies par adhérence, caractérisée en ce que les parois extérieures sont composées d'une couche d'âme (4) qui constitue plus de la moitié de l'épaisseur de la paroi extérieure et est faite d'une matière plastique rigide extrudable, ayant un indice de réfraction optique n ≥ 1,48, et de couches de recouvrement interne et externe (5, 8), disposées de part et d'autre de la couche d'âme, en une matière plastique ayant un indice de réfraction optique n ≤ 1,46.

2. Plaque à nervures multicouche selon la revendication 1, caractérisée en ce que la matière plastique de la couche d'âme est une matière plastique de polyméthacrylate, de polycarbonate, de polystyrène ou de chlorure de polyvinyle.

3. Plaque à nervures multicouche selon la revendication 2, caractérisée en ce que la matière plastique de la couche d'âme (4) est une matière plastique de carbonate à base de bisphénol A.

4. Plaque à nervures multicouche selon la revendication 2, caractérisée en ce que la matière plastique de la couche d'âme (4) est faite de polyméthacrylate de méthyle.

5. Plaque à nervures multicouche selon l'une quelconque des revendications 1 à 4, caractérisée en ce que les couches de recouvrement (5, 8) sont unies à la couche d'âme (4) par co-extrusion.

6. Plaque à nervures multicouche selon l'une quelconque des revendications 1 à 5, caractérisée en ce que la matière plastique des couches de recouvrement (5, 8) contient au moins 10 % en poids de fluor.

7. Plaque à nervures multicouche selon la revendication 6, caractérisée en ce que la matière plastique des couches de recouvrement est faite d'un mélange transparent de polyfluorure de vinylidène et d'un poly(méth)acrylate d'alkyle.

8. Plaque à nervures multicouche selon la revendication 7, caractérisée en ce que le mélange transparent se compose de 20 à 90 % en poids de polyfluorure de vinylidène et de 80 à 10 % en poids de polyméthacrylate de méthyle.

9. Plaque à nervures multicouche selon l'une quelconque des revendications 1 à 8, caractérisée en ce qu'elle comporte, entre les parois extérieures (1, 2), au moins un plan intermédiaire supplémentaire (18) qui est fait, au moins sur ses surfaces, d'une matière plastique ayant un indice de réfraction n ≤ 1,46.

10. Plaque à nervures multicouche selon l'une quelconque des revendications 1 à 3, caractérisée en ce que les couches de recouvrement (5, 8) sont faites d'un polysiloxane.

11. Plaque à nervures multicouche selon la revendication 10, caractérisée en ce que les couches de recouvrement (5, 8) sont faites d'un polysiloxane non plastifiable thermiquement.

12. Plaque à nervures multicouche selon l'une quelconque des revendications 1 à 11, caractérisée en ce qu'il est disposé, entre les couches de recouvrement (5, 8) et la couche d'âme (4), une couche intermédiaire (19) qui adhère bien à ces couches.

13. Plaque à nervures multicouche selon la revendication 12, caractérisée en ce que la couche intermédiaire (19) a un indice de réfraction optique qui se situe entre celui de la couche d'âme et celui de la couche de recouvrement (5, 8).

Fig.1

Fig. 2

Fig. 3

1

Fig. 4

EP 0 201 816 B1